# EUROPÄISCHE PATENTSCHRIFT

(11) **EP 0 797 078 B1**
(45) Veröffentlichungstag und Bekanntmachung des Hinweises auf die Patenterteilung: **26.09.2001**
(21) Anmeldenummer: 97103910.2
(22) Anmeldetag: 08.03.1997
(51) Int. Cl.: G01D 5/20, G01B 7/30

(54) **Induktiver Drehwinkelsensor**
Inductive sensor for measuring the angle of rotation
Capteur inductif pour mesurer l'angle de rotation

(30) Priorität: 23.03.1996 DE 19611488; 22.02.1997 DE 19707122
(43) Veröffentlichungstag der Anmeldung: 24.09.1997
(73) Patentinhaber: WABCO GmbH & Co. OHG, 30453 Hannover (DE)
(72) Erfinder: Eden, Gerd, 26524 Hage (DE); Groetzinger, Stefan, 30989 Gehrden (DE); Heinrich, Horst, 30455 Hannover (DE)
(74) Vertreter: Schrödter, Manfred, Dipl.-Ing.

(56) Entgegenhaltungen:
- DE-A- 4 335 594
- GB-A- 2 288 025

## Beschreibung

Die Erfindung betrifft induktive Drehwinkelsensoren gemäß den Oberbegriffen des Patentansprüche 1 und 2.

Derartige Drehwinkelsensoren sind aus der DE 43 35 594 A1 bekannt.

Beim bekannten Drehwinkelsensor besteht das Funktionsprinzip darin, daß durch eine Drehung eines drehbar innerhalb eines Spulenkörpers gelagerten magnetisch leitfähigen Elementes das Verhältnis der Induktivitäten zweier auf einen Spulenkörper gewickelter Spulenwicklungen zueinander verändert wird. Eine derartige Anordnung ist somit mit einem Transformator mit veränderbarem Kopplungsgrad vergleichbar.

Zur Erzeugung eines den Drehwinkel charakterisierenden Signals wird beim bekannten Drehwinkelsensor eine Wechselspannung in die erste Spulenwicklung eingespeist. Diese Wechselspannung induziert je nach dem Verhältnis der Induktivitäten der beiden Spulenwicklungen zueinander in Abhängigkeit von der Winkellage des magnetisch leitfähigen Elementes eine bestimmte Ausgangsspannung in der zweiten Spulenwicklung. Das Verhältnis der Amplitude dieser Ausgangsspannung zu der Amplitude der in die erste Spulenwicklung eingespeisten Eingangsspannung stellt dann ein Maß für den sensierten Drehwinkel dar.

Der Nachteil dieses Funktionsprinzips besteht darin, daß für den Betrieb des Drehwinkelsensors ein hochfrequentes Wechselspannungssignal benötigt wird, dessen Kurvenform einen sinusförmigen Zeitverlauf aufweisen sollte. Sensoren der gattungsgemäßen Art werden üblicherweise in Verbindung mit elektronischen Systemen, die die Auswertung der Sensorsignale durchführen, eingesetzt. Derartige elektronische Systeme sind in heutiger Zeit nahezu immer in Digitaltechnik ausgeführt. Da diese Systeme zur Steuerung weiterer Funktionen neben der Signalauswertung eines Sensors zumeist auch einen Mikroprozessor aufweisen, ergibt sich die Notwendigkeit, daß Sensoren für derartige Systeme auch mit solchen Signalarten betrieben werden können, die in digitalen elektronischen Systemen mit Mikroprozessoren vorzugsweise eingesetzt werden. Zu diesen Signalen gehört eine sinusförmige Wechselspannung jedoch nicht.

Ein Betrieb des bekannten Drehwinkelsensors mit einem in der Digitaltechnik üblichen rechteckförmigen Wechselspannungssignal hätte den Nachteil, daß durch die in einem solchen Signal enthaltenen Oberwellen unerwünschte und unter Umständen unvorhergesehene Resonanzeffekte auftreten können, die zu einer Verschlechterung des elektronischen Systems hinsichtlich seiner elektromagnetischen Verträglichkeit (EMV) mit anderen elektronischen Systemen führen können.

Ein weiterer Nachteil des Funktionsprinzips des bekannten Drehwinkelsensors ist die Tatsache, daß auch als Ausgangssignal in der zweiten Spulenwicklung ebenfalls ein Wechselspannungssignal zur Verfügung steht. Da es für die Sensierung des Drehwinkels erforderlich ist, die Amplitude des Ausgangssignals zu messen, ist es in einem digitalen elektronischen System notwendig, dieses Signal durch einen Gleichrichter sowie gegebenenfalls durch einen Verstärker in ein Gleichspannungssignal von adäquater Größe umzuwandeln. Hierbei muß das Gleichspannungssignal eine solche Größe aufweisen, die von einem Analog/Digital-Wandler verarbeitet werden kann. Elektronische Schaltungskomponenten wie Gleichrichter, Verstärker und Analog/Digital-Wandler verursachen jedoch einen hohen schaltungstechnischen Aufwand und sollten daher vermieden werden.

Zusätzlich zu den bereits genannten Nachteilen hat der bekannte Drehwinkelsensor den weiteren Nachteil, daß durch die Verwendung zweier Spulenwicklungen mindestens drei, meistens jedoch sogar vier elektrische Anschlüsse notwendig sind. Ein geeigneter Steckverbinder für den Anschluß eines derartigen Drehwinkelsensors benötigt daher wenigstens drei oder gegebenenfalls sogar vier elektrische Kontakte. Für viele Anwendungen ist es jedoch vorteilhaft, Sensoren mit einer möglichst geringen Anzahl von elektrischen Anschlüssen einzusetzen.

Weiter ist aus der GB-A- 22 88 025 ein induktiver Drehwinkelsensor bekannt, welcher eine einzige Spule aufweist, die in einem zweigeteilten topfförmigen Kern eingeschlossen ist. Die Spule weist eine konzentrische Drehachse auf, auf welcher innerhalb der Spule ein kreissektorförmiges magnetisch leitendes Teil befestigt ist. Der Topfkern ist im Inneren der Spule so ausgebildet, daß sein magnetischer Widerstand bei einer Stellung des drehbaren Teiles minimal, und bei einer um 180° verdrehten Stellung des drehbaren Teils maximal ausfällt. Zur Sensierung des Drehwinkels wird die vom Drehwinkel abhängige Induktivität der Spule elektronisch ausgewertet. Der bekannte Drehwinkelsensor hat den Nachteil, daß der Topfkern relativ kompliziert ausgebildet ist und deshalb seine Herstellung aufwendig sein dürfte.

Der Erfindung liegt die Aufgabe zugrunde, einen induktiven Drehwinkelsensor in vereinfachter Ausführungsform anzugeben.

Die oben genannte Aufgabe wird durch die in den Patentansprüchen 1 und 2 angegebenen Ausgestaltungen der Erfindung gelöst. Weiterbildungen und vorteilhafte Ausführungsformen der Erfindung sind in den Unteransprüchen angegeben.

Ein Vorteil der Erfindung besteht darin, daß die Spule nur eine einzige Wicklung aufweist. Daher weist der erfindungsgemäße Drehwinkelsensor nur zwei elektrische Anschlüsse auf. Durch die Verwendung einer Spule mit nur einer Wicklung besteht beim erfindungsgemäßen Drehwinkelsensor das Funktionsprinzip darin, durch eine Änderung des Drehwinkels, der sensiert werden soll, die Eigeninduktivität der Spule zu ändern. Durch diese Eigenschaft ist der Drehwinkelsensor besonders geeignet für den Anschluß an ein digitales elektronisches System, vorzugsweise mit einem Mikroprozessor, wobei nur sehr wenige weitere Schaltungsmittel benötigt werden.

Eine Ausführungsform von derartigen weiteren Schaltungsmitteln sowie ein dazugehöriges Auswerteverfahren, das für die erfindungsgemäßen Drehwinkelsensoren geeignet ist, ist in der DE 43 13 273 A1 angegeben. Daher soll an dieser Stelle nur kurz ein geeignetes Auswerteverfahren erläutert werden.

Ein geeignetes Auswerteverfahren besteht darin, daß von einem Mikroprozessor ein rechteckförmiger Impuls in die Spule des Drehwinkelsensors eingespeist wird. Bei geeigneter Wahl der Schaltungsmittel kann aus der Dauer des Abklingens des Impulses bis auf einen Schwellenwert die Eigeninduktivität der Spule bestimmt werden. Der zu sensierende Drehwinkel wird somit mittels einer Zeitmessung bestimmt. Ein derartiges Auswerteverfahren ist deswegen besonders vorteilhaft, weil sich Mikroprozessoren naturgemäß in besonderer Weise für die Messung von Zeitdifferenzen sowie zur Erzeugung von rechteckförmigen Impulsen eignen.

Gemäß einer vorteilhaften Weiterbildung ist die Spule wenigstens zum Teil mit magnetisch leitfähigem Material umgeben. Das magnetisch leitfähige Material ist dann besonders vorteilhaft angeordnet, wenn es senkrecht zur Längsachse der Spule angeordnet ist. Es ist auch vorteilhaft, das magnetisch leitfähige Material parallel zur Längsachse der Spule anzuordnen. Auch eine Kombination dieser beiden Möglichkeiten ist vorteilhaft. Durch jede dieser Maßnahmen wird der magnetische Widerstand, den der magnetische Fluß durch die Spule zu überwinden hat, verringert. Hierdurch wird die Empfindlichkeit des Drehwinkelsensors erhöht.

Gemäß einer weiteren vorteilhaften Weiterbildung ist wenigstens ein Teil des magnetisch leitfähigen Materials in wenigstens einem der Endbereiche der Spule angeordnet. Als Endbereiche der Spule werden hier die offenen, nicht durch die Windungen der Spulenwicklung umschlossenen Bereiche der Spule angesehen. Hierdurch ist es möglich, durch eine Änderung des Drehwinkels den Abstand zwischen dem magnetisch leitfähigen Element und dem magnetisch leitfähigen Material von einem sehr kleinen Wert bis zu einem im Verhältnis dazu sehr großen Wert veränderbar zu machen. Hierdurch wird die Empfindlichkeit des Drehwinkelsensors insbesondere bei kleinen Änderungen des Drehwinkels durch eine weitere Verringerung des magnetischen Widerstands weiter erhöht.

In einer besonders vorteilhaften Ausführungsform ist das magnetisch leitfähige Element so ausgebildet, daß es im Verhältnis zu seiner Länge eine geringe Dicke aufweist. Hierdurch wird die Herstellung des magnetisch leitfähigen Elementes in besonders günstiger Weise vereinfacht. Das magnetisch leitfähige Element kann z. B. durch Stanzen aus einer Blechplatte hergestellt werden.

In einer weiteren vorteilhaften Ausführungsform ist das magnetisch leitfähige Element so angeordnet, daß es um seine Drehachse in eine beliebige Winkellage gedreht werden kann. Dies bedeutet, daß das magnetisch leitfähige Element auch bei einer vollständigen Drehung keiner mechanischen Begrenzung unterworfen ist. Hierdurch wird eine Beschädigung durch unsachgemäße Anwendung des Drehwinkelsensors vermieden. Ein weiterer Vorteil dieser Ausführungsform ist, daß der Drehwinkelsensor in einfacher Weise in verschiedenen Einbaulagen montiert werden kann.

In einer weiteren Weiterbildung ist das magnetisch leitfähige Element an einer Welle befestigt, die um die Drehachse drehbar ist. Eine solche Welle kann direkt zur Erfassung des Drehwinkels verwendet werden, indem sie mit dem zu sensierenden Element mechanisch verbunden wird. Die Befestigung des magnetisch leitfähigen Elementes an der Welle kann z. B. durch Schweißen, Löten, Kleben oder Verschrauben erfolgen. Es ist jedoch auch möglich, die Welle z. B. als Kunststoffspritzteil derart auszubilden, daß sie das magnetisch leitfähige Element formschlüssig aufnimmt.

In einer weiteren vorteilhaften Weiterbildung ist das magnetisch leitfähige Element in einer rechteckigen oder quadratischen Form ausgebildet. Hierdurch ist es bei entsprechender Anordnung innerhalb der Spule möglich, eine weitere Verringerung des magnetischen Widerstandes und somit eine Erhöhung der Empfindlichkeit des Drehwinkelsensors zu bewirken, indem die äußere Kontur des magnetisch leitfähigen Elementes parallel zu dem einen Teil des magnetisch leitfähigen Materials verläuft, das in wenigstens einem der Endbereiche der Spule angeordnet ist.

Gemäß einer vorteilhaften Weiterbildung ist die Spule in Kastenform mit rechteckigem oder quadratischem Querschnitt ausgeführt. Im Gegensatz zu der sonst üblichen zylinderförmigen Ausführung einer Spule hat diese Bauweise den Vorteil, daß eine Anpassung an die Form des magnetisch leitfähigen Elementes möglich ist, wenn dieses ebenfalls eine rechteckige oder quadratische Form aufweist. In diesem Fall kann der Innenraum der Spule weitestgehend mit dem magnetisch leitfähigen Element ausgefüllt werden, ohne daß die Drehbewegung des magnetisch leitfähigen Elementes mechanisch begrenzt wird.

In einer weiteren vorteilhaften Weiterbildung ist die Spule innerhalb einer weiteren Spule, die ebenfalls eine einzige Wicklung aufweist, angeordnet. Das magnetisch leitfähige Element befindet sich dann innerhalb beider Spulen. Durch eine Drehung des magnetisch leitfähigen Elementes um seine Drehachse werden dann die Eigeninduktivitäten beider Spulen verändert. Hierdurch ist es möglich, dieselbe Drehwinkelgröße über verschiedene Stromkreise verschiedenen elektronischen Systemen zugänglich zu machen, wobei die Stromkreise galvanisch voneinander getrennt sind. Dadurch können mehrere elektronische Systeme unabhängig voneinander dieselbe Drehwinkelgröße erfassen.

Eine vorteilhafte Weiterbildung der Ausgestaltung gemäß Patentanspruch 2 weist eine besondere Ausbildung der Querschnittskontur des magnetisch leitfähigen Elementes auf. Gemäß dieser Ausgestaltung der Erfindung ist das magnetisch leitfähige Element als ein Sektor eines rotationssymmetrischen Körpers, dessen Symmetrieachse parallel zu der Drehachse des magnetisch leitfähigen Elementes angeordnet ist, ausgebildet. Der rotationssymmetrische Körper kann prinzipiell eine beliebige Innen- oder Außenkontur aufweisen, d.h. es kann auch ein Hohlkörper oder ein Körper mit beliebig gekrümmter Kontur verwendet werden.

In einer besonders vorteilhaften Weiterbildung dieser Ausgestaltung wird vorzugsweise ein Sektor eines Kreiszylinders oder eines Kegelstumpfes als magnetisch leitfähiges Element verwendet. Hierdurch ist das magnetisch leitfähige Element einfach herzustellen.

In einer weiteren vorteilhaften Weiterbildung dieser Ausgestaltung weist das in einem Endbereich des magnetisch leitfähigen Elementes angeordnete magnetisch leitfähige Teil eine im wesentlichen gerade Kontur seiner der Drehachse des magnetisch leitfähigen Elementes zugewandten Stirnseite auf. In Verbindung mit der Ausbildung des magnetisch leitfähigen Elementes als Sektor eines Kreiszylinders oder eines Kegelstumpfes wird bei dessen Verdrehung um einen bestimmten Drehwinkel eine von diesem Drehwinkel abhängige Überdeckungsfläche dieser beiden Teile hervorgerufen, die sich linear mit dem Drehwinkel ändert. Der magnetische Fluß durch die Spule wird vorzugsweise im Bereich der Überdeckungsfläche, wo der magnetische Widerstand der Anordnung besonders gering ist, weitergeleitet.

Durch die vorstehend beschriebene Ausgestaltung des magnetisch leitfähigen Elementes und des hiermit in Wirkverbindung stehenden magnetisch leitfähigen Teils ist es möglich, eine in vielen Anwendungsfällen erwünschte lineare Abhängigkeit der Induktivität des Drehwinkelsensors, die linear von der Überdeckungsfläche abhängig ist, zu dem Drehwinkel zu erreichen. Zusätzlich ist es möglich, in einer bestimmten, als Null-Lage definierten Winkellage, in der das magnetisch leitfähige Element keine Überdeckungsfläche mit dem magnetisch leitfähigen Teil aufweist, einen im Verhältnis zu den anderen Winkellagen sehr großen magnetischen Widerstand der Anordnung und somit eine besonders geringe Induktivität des Drehwinkelsensors zu bewirken. Hierdurch kann ein besonders großer Wertebereich der Induktivität und somit eine gute Auflösung der zu sensierenden Winkelmeßwerte erzielt werden.

Die Erfindung wird anhand zweier Ausführungsbeispiele unter Zuhilfenahme von Zeichnungen näher erläutert.

Es zeigen:
- Fig. 1: eine perspektivische Schnittdarstellung des Drehwinkelsensors gemäß Patentanspruch 1 mit einer Schnittebene, die senkrecht zur Drehachse des magnetisch leitfähigen Elementes verläuft und
- Fig. 2: eine Schnittdarstellung des Drehwinkelsensors gemäß Fig. 1 mit einer Schnittebene, die senkrecht zur Längsachse der Spule verläuft und
- Fig. 3: eine Schnittdarstellung des Drehwinkelsensors gemäß Patentanspruch 2 mit einer Schnittebene, die parallel zur Drehachse des magnetisch leitfähigen Elementes verläuft und
- Fig. 4: eine Ansicht einer weiteren Ausführungsform des Drehwinkelsensors gemäß Patentanspruch 2 mit einer Blickrichtung, die parallel zur Drehachse des magnetisch leitfähigen Elementes verläuft.

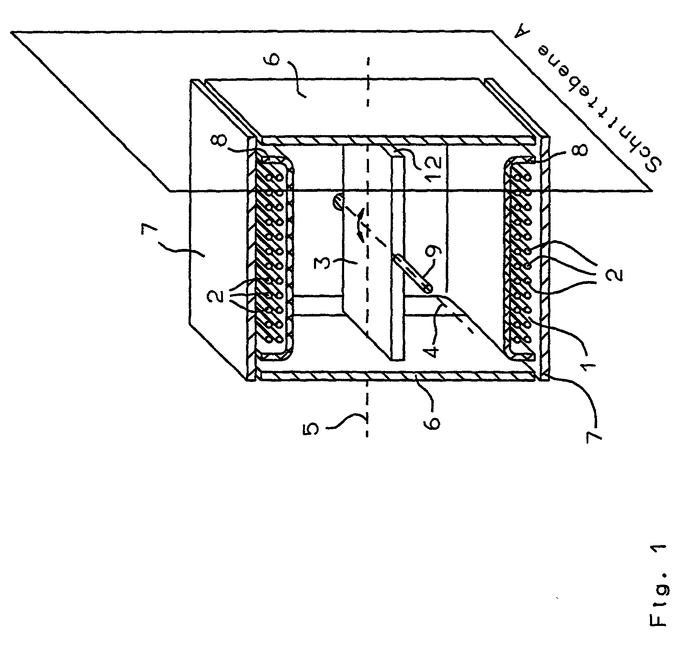

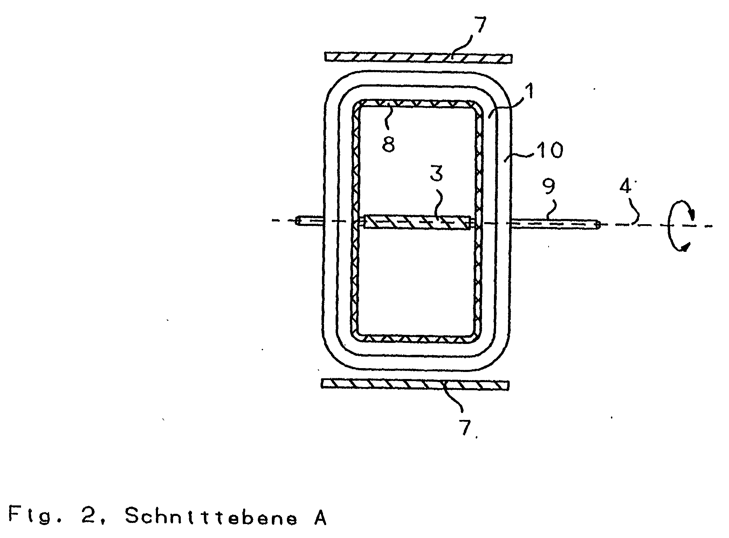

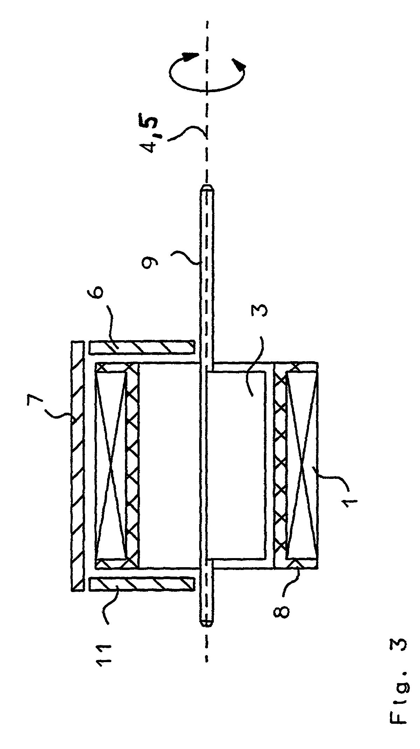

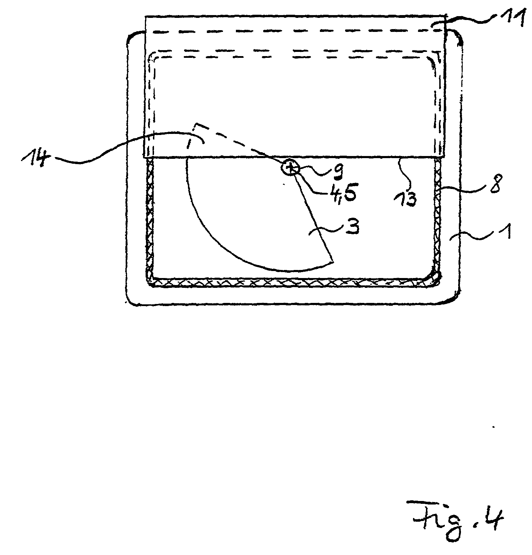

In den Fig. 1 und 2 einerseits und den Fig. 3 und 4 andererseits werden gleiche Bezugszeichen für Teile mit vergleichbaren Funktionen verwendet.

Die in Fig. 1 dargestellte Ansicht zeigt eine Ausführungsform des erfindungsgemäßen Drehwinkelsensors mit einer Spule (1), die Windungen (2) aufweist. Die Windungen (2), die z. B. aus lackiertem Draht bestehen können, sind in einer bevorzugten Ausführungsform um einen Spulenkörper (8) gewickelt. Es ist jedoch für die Funktion des Drehwinkelsensors nicht unbedingt erforderlich, einen Spulenkörper (8) zu verwenden. Der Spulenkörper (8) ist vorzugsweise aus einem Material gefertigt, das nicht magnetisch leitfähig ist. Die Windungen (2) bestehen aus einem einzigen um den Spulenkörper (8) gewickelten Draht. Sie können aber auch aus mehreren durch eine Reihenschaltung miteinander verbundenen Drähten bestehen, die z. B. in mehreren nebeneinander angeordneten Kammern des Spulenkörpers (8) liegen. Die Spule (1) besteht in jedem Fall aus einer einzigen Wicklung und weist aus diesem Grunde nur zwei elektrische Anschlüsse auf, die in der Fig. 1 jedoch nicht dargestellt sind. Die Spule (1) weist zudem eine Längsachse (5) auf.

Innerhalb der Spule (1) befindet sich ein magnetisch leitfähiges Element (3), das aus einem magnetisch leitfähigen Material wie z. B. Relaiswerkstoff gemäß DIN 17405 besteht. Das magnetisch leitfähige Element (3) ist um eine Drehachse (4) drehbar angeordnet. Das magnetisch leitfähige Element (3) ist an einer Welle (9) befestigt, die zur mechanischen Übertragung der zu sensierenden Drehbewegung dient. Die Längsachse der Welle (9) entspricht hierbei der Drehachse (4) des magnetisch leitfähigen Elementes (3).

Zur Verbesserung der Empfindlichkeit des Drehwinkelsensors ist die bisher beschriebene Anordnung an mehreren Seiten mit magnetisch leitfähigem Material (6, 7) umgeben. Das magnetisch leitfähige Material (6, 7) dient zur Verringerung des magnetischen Widerstands, den der magnetische Fluß zu überwinden hat. Als magnetisch leitfähiges Material (6, 7) kann z. B. das gleiche Material verwendet werden wie für das magnetisch leitfähige Element (3).

Das magnetisch leitfähige Material (6, 7) kann z. B. aus Blechstücken angefertigt werden. Es sind dann jeweils zwei Blechstücke (6) gleicher Form in den Endbereichen der Spule (1) senkrecht oder nahezu senkrecht zur Spulenachse (5) angeordnet. Zwei weitere Blechstücke (7) gleicher Form sind parallel oder nahezu parallel zur Längsachse (5) der Spule (1) angeordnet. Die Blechstücke (6, 7) bilden dadurch eine geschlossene oder nahezu geschlossene kastenförmige Anordnung, die einen geringen magnetischen Widerstand aufweist. Je nach Ausbildung des Drehwinkelsensors können die Blechstücke (6) auch eine andere Form aufweisen als die Blechstücke (7). Selbstverständlich ist es auch möglich, das magnetisch leitfähige Material (6, 7) z. B. aus nur einem abgewinkelten Blechstück anzufertigen.

Der erfindungsgemäße Drehwinkelsensor funktioniert in folgender Weise:

Es soll zunächst angenommen werden, daß sich das magnetisch leitfähige Element (3) in der Darstellung gemäß Fig. 1 in seiner Null-Lage befindet. In dieser Lage erreicht der Abstand zwischen dem magnetisch leitfähigem Element (3) und dem magnetisch leitfähigen Material (6) seinen kleinsten Wert. Der magnetische Fluß kann bei dieser Lage des magnetisch leitfähigen Elementes (3) nahezu seinen gesamten Weg innerhalb des Materials mit hoher magnetischer Leitfähigkeit zurücklegen, indem er durch das magnetisch leitfähige Element (3) sowie durch die Blechstücke (6) und (7) fließt. Nur einen geringen Teil seines Weges legt der magnetische Fluß dann in dem den Drehwinkelsensor umgebenden Medium, das im allgemeinen eine geringe magnetische Leitfähigkeit aufweist, wie z. B. Luft, zurück. Der magnetische Widerstand des magnetischen Kreises ist somit gering. Hierdurch ist die Induktivität des Drehwinkelsensors groß.

Durch eine Drehung der Welle (9) in eine beliebige Richtung verändert sich in gleicher Weise die Winkellage des magnetisch leitfähigen Elementes (3). Hierbei vergrößert sich der Abstand zwischen dem magnetisch leitfähigen Element (3) und dem Blechstück (6). Somit vergrößert sich auch der Weg, den der magnetische Fluß in dem den Drehwinkelsensor umgebenden Medium mit geringer magnetischer Leitfähigkeit zurücklegen muß.

Hierdurch erhöht sich der magnetische Widerstand des magnetischen Kreises, und die Induktivität des Drehwinkelsensors verringert sich.

Die Induktivität erreicht ihren kleinsten Wert bei einer Winkellage von 90 Grad, ausgehend von der Null-Lage. Bei einer weiteren Vergrößerung des Drehwinkels erhöht sich die Induktivität wieder bis zu ihrem größtmöglichen Wert, der bei einer Winkellage von 180 Grad erreicht wird. Dieses Verhalten wiederholt sich nach jeder weiteren halben Drehung der Welle (9) bzw. des magnetisch leitfähigen Elementes (3).

In der Fig. 2 ist ein weiterer Schnitt durch den Drehwinkelsensor gemäß Fig. 1 dargestellt (Schnittebene A). Die Lage der Schnittebene A ist in der Fig. 1 dargestellt. In der Fig. 2 sind die einzelnen Windungen (2) der Spule (1) nicht dargestellt. Die Blechstücke (6) sind zur Vereinfachung der Darstellung ebenfalls nicht dargestellt.

Die Fig. 2 zeigt zusätzlich zu den in der Fig. 1 dargestellten Teilen des Drehwinkelsensors noch eine weitere Spule (10) zur Erzeugung eines weiteren Drehwinkelsignals, das vom Drehwinkelsignal der Spule (1) galvanisch getrennt ist. Die weitere Spule (10) weist ebenfalls eine einzige Wicklung auf, die aus Windungen besteht, die entweder um einen weiteren Spulenkörper oder direkt um die Spule (1) gewickelt sind. Statt des weiteren Spulenkörpers kann zwischen den Spulen (1, 10) auch ein anderes Material, das nicht magnetisch leitfähig ist, angeordnet werden. In jedem Fall ist aber die Spule (1) innerhalb der Spule (10) angeordnet. Die Änderung der Eigeninduktivitäten der Spulen (1, 10) wird dann durch eine Änderung der Winkellage eines einzigen magnetisch leitfähigen Elementes (3) bewirkt. Ein weiteres drehbar angeordnetes magnetisch leitfähiges Element wird nicht benötigt.

Das magnetisch leitfähige Element (3) kann prinzipiell eine beliebige Form aufweisen. Vorteilhaft ist es jedoch, das magnetisch leitfähige Element (3) in einer solchen Form auszubilden, daß es bei einer bestimmten Winkellage, z. B. bei der in der Fig. 1 dargestellten Horizontallage, einen möglichst geringen Abstand zu dem magnetisch leitfähigen Material (6) aufweist. Daher ist es besonders günstig, das magnetisch leitfähige Element (3) als ein flaches Blechstück mit rechteckförmiger Kontur auszubilden. Das magnetisch leitfähige Element (3) kann zur Verringerung von Wirbelströmen auch aus mehreren dünnen Blechstücken gebildet werden.

Eine Art der Anordnung des magnetisch leitfähigen Elementes (3) an der Welle (9) ist in den Fig. 1 und 2 dargestellt. In einer anderen Anordnungsart kann das magnetisch leitfähige Element (3) jedoch auch senkrecht zu der in den Fig. 1 und 2 dargestellten Lage an der Welle (9) befestigt werden. In diesem Fall ist es vorteilhaft, die den Blechstücken (6) zugewandten Stirnflächen (12) des magnetisch leitfähigen Elementes (3) mit Abrundungen zu versehen.

Die Spule (1) kann grundsätzlich eine beliebige Querschnittsform aufweisen. Besonders günstig ist es jedoch, die Querschnittsform der Spule (1) an die Kontur des magnetisch leitfähigen Elementes (3) anzupassen. Bei Verwendung eines magnetisch leitfähigen Elementes (3) mit einer rechteckförmigen Kontur ist es daher vorteilhaft, die Spule (1) kastenförmig mit rechteckigem Querschnitt auszubilden. Hierdurch kann ein besonders kompakter Aufbau des Drehwinkelsensors in Verbindung mit einer besonders guten Empfindlichkeit erreicht werden. Durch die Anordnung der Welle (9) im mittleren Bereich der Spule (1) sowie durch symmetrische Anordnung des magnetisch leitfähigen Elementes (3) an der Welle (9) ist es dann außerdem möglich, das magnetisch leitfähige Element (3) mittels der Welle (9) um einen beliebigen Drehwinkel zu drehen, ohne daß diese Drehbewegung durch Teile des Drehwinkelsensors mechanisch begrenzt wird.

Die in Fig. 3 dargestellte Ausführungsform des erfindungsgemäßen Drehwinkelsensors weist ebenfalls wie die Ausführungsform nach Fig. 1 und 2 eine Spule (1), die auf einen Spulenkörper (8) gewickelt ist, ein an einer Welle (9) befestigtes magnetisch leitfähiges Element (3) sowie die Blechstücke (6, 7) aus magnetisch leitfähigem Material auf. Die Welle (9) ist ebenfalls um die Drehachse (4) drehbar. Die Windungen (2) der Spule (1) sind in dieser Darstellung nicht gezeigt.

Im Gegensatz zu der in der Fig. 1 dargestellten Ausführungsform des Drehwinkelsensors ist hier die Drehachse (4) des magnetisch leitfähigen Elementes (3) parallel zur Längsachse (5) der Spule (1) angeordnet. Die Drehachse (4) kann gemäß der Darstellung in der Fig. 3 natürlich auch genau mit der Längsachse (5) übereinstimmen. Zusätzlich zu der in Fig. 1 und 2 dargestellten Ausführungsform weist diese Ausführungsform ein magnetisch leitfähiges Teil (11) auf, das in einem Endbereich des magnetisch leitfähigen Elementes (3) angeordnet ist. Das magnetisch leitfähige Teil (11) ist unbeweglich zur Spule (1) z. B. am Spulenkörper (8) befestigt. Das magnetisch leitfähige Teil (11) kann ebenso wie das magnetisch leitfähige Material (6, 7) als flaches Blechstück ausgebildet sein. Es ist auch möglich, die Blechstücke (6, 7, 11) einstückig auszubilden, z. B. als abgewinkeltes Blechstück.

In der Ausführungsform gemäß Fig. 3 erfolgt eine Änderung des magnetischen Widerstandes, den der magnetische Fluß durch die Spule (1) überwinden muß, ebenfalls durch eine Änderung der Winkellage des magnetisch leitfähigen Elementes (3) mittels der Welle (9). Durch eine Drehung der Welle (9) wird der Abstand zwischen dem magnetisch leitfähigen Element (3) und den Blechstücken (6, 11) verändert. Ausgehend von der in der Fig. 3 dargestellten Winkellage des magnetisch leitfähigen Elementes (3), bei der sich das magnetisch leitfähige Element (3) vollständig außerhalb des durch die Blechstücke (6, 7, 11) umgebenen Raumes befindet, wird durch Verdrehen der Welle (9) der zuvor genannte Abstand verringert, und das magnetisch leitfähige Element (3) verlagert sich in den durch die Blechstücke (6, 7, 11) umgebenen Raum. Hierbei überdeckt sich das magnetisch leitfähige Element (3) wenigstens zum Teil mit den Blechstücken (6, 7) in Wirkrichtung des magnetischen Flusses. Nach einer halben Umdrehung der Welle (9) erreicht der magnetische Widerstand seinen kleinsten Wert und die Eigeninduktivität des Drehwinkelsensors erreicht ihren größten Wert.

Durch die Wahl einer geeigneten Querschnittskontur des magnetisch leitfähigen Elementes (3), wie z. B. ein Halbkreis oder ein Rechteck, kann die Kennlinie des Drehwinkelsensors an die jeweiligen Erfordernisse angepaßt werden.

In der Fig. 4 ist eine derartige geeignete Querschnittskontur des magnetisch leitfähigen Elementes (3) sowie die entsprechende Anordnung des magnetisch leitfähigen Teils (11) dargestellt, durch die einerseits - ein besonders großer Wertebereich der Induktivität des - Drehwinkelsensors und außerdem eine im wesentlichen lineare Abhängigkeit der Induktivität von dem Drehwinkel erzielt werden kann.

In diesem Ausführungsbeispiel ist das magnetisch leitfähige Element (3) als ein Sektor eines Kreiszylinders ausgebildet. Die der Drehachse (4) zugewandte Stirnfläche (13) des magnetisch leitfähigen Teils (11) weist eine gerade Kontur auf. Hierbei wird das lineare Verhalten des Drehwinkelsensors durch die im wesentlichen lineare Abhängigkeit der Überdeckungsfläche (14), die sich zwischen dem magnetisch leitfähigen Element (3) und dem magnetisch leitfähigen Teil (11) bildet, von dem Drehwinkel erreicht.

Zur Erzielung eines möglichst großen Wertebereiches der Induktivität ist es notwendig, in wenigstens einer Winkellage des magnetisch leitfähigen Elementes eine möglichst geringe Überdeckungsfläche (14) zu erreichen oder sogar eine Überdeckung ganz zu vermeiden. Daher ist der Öffnungswinkel des Zylindersektors (3) in diesem Ausführungsbeispiel kleiner oder gleich 180 Grad.

Es ist jedoch auch möglich, das magnetisch leitfähige Teil (11) mit zwei in einem Winkel zueinander angeordneten Stirnseiten (13) zu versehen und gegebenenfalls den Öffnungswinkel des Zylindersektors (3) zu vergrößern. Hierbei sind die Öffnungswinkel derart aneinander anzupassen, daß in einer bestimmten Winkellage eine Überdeckung zwischen den Teilen (3, 11) vermieden wird.

Bei Verwendung eines Halbzylinders als magnetisch leitfähiges Element (3) in Verbindung mit einem magnetisch leitfähigen Teil (11) mit einer geraden Kontur ist es vorteilhaft, die Drehachse (4) außerhalb des von dem magnetisch leitfähigen Teil (11) überdeckten Bereiches anzuordnen. Hierdurch kann ebenfalls in einer bestimmten Winkellage eine Überdeckung zwischen den Teilen (3, 11) vermieden werden.

## Patentansprüche

1. Drehwinkelsensor mit folgenden Merkmalen:
a) es ist eine Spule (1) vorhanden, die Windungen (2) aufweist,
b) innerhalb der Spule (1) befindet sich ein magnetisch leitfahiges Element (3),
c) das magnetisch leitfähige Element (3) ist so angeordnet, daß es um eine Drehachse (4) drehbar ist,
d) ein Bereich der Drehachse (4) befindet sich innerhalb der Spule (1),
e) das magnetisch Leitfähige Element (3) weist im Verhältnis zu seiner Länge eine geringe Dicke auf,
f) die Spule (1) weist eine einzige Wicklung auf,
**gekennzeichnet durch** folgende Merkmale:
g) die Drehachse (4) des magnetisch Leitfähigen Elementes (3) ist senkrecht zur Längsachse (5) der Spule (1) angeordnet,
h) das magnetisch leitfähige Element (3) weist eine rechteckige oder quadratische Form auf,
i) die Spule (1) ist in Kastenform mit rechteckigem oder quadratischem Querschnitt ausgeführt.

2. Drehwinkelsensor mit folgenden Merkmalen:
a) es ist eine Spule (1) vorhanden, die Windungen (2) aufweist,
b) innerhalb der Spule (1) befindet sich ein magnetisch leitfähiges Element (3),
c) das magnetisch leitfähige Element (3) ist so angeordnet, daß es um eine Drehachse (4) drehbar ist,
d) ein Bereich der Drehachse (4) befindet sich innerhalb der Spule (1),
e) die Drehachse (4) des magnetisch leitfähigen Elementes (3) ist parallel zur Längsachse (5) der Spule (1) angeordnet,
f) die Spule (1) weist eine einzige Wicklung auf,
g) die Spule (1) ist wenigstens zum Teil mit magnetisch leitfähigem Material (6, 7) umgeben,
h) wenigstens ein Teil (6) des magnetisch leitfähigen Materials (6, 7) ist senkrecht zur Längsachse (5) der Spule (1) angeordnet,
i) wenigstens ein Teil (7) des magnetisch leitfähigen Materials (6, 7) ist parallel zur Längsachse (5) der Spule (1) angeordnet,
j) ein magnetisch leitfähiges Teil (11) ist in einem Endbereich des magnetisch leitfähigen Elementes (3) unbeweglich zur Spule (1) angeordnet,
**gekennzeichnet durch** folgende Merkmale :
k) die der Drehachse (4) zugewandte Stirnseite (13) des magnetisch leitfähigen Teils (11) weist eine gerade Kontur auf,
l) die magnetischen leitfähigen Teile (6, 7, 11) sind als Blechteile ausgebildet, welche die Spule (1) halbseitig umschliessen.

3. Drehwinkelsensor nach wenigstens einem der vorangehenden Patentansprüche **gekennzeichnet durch** folgende Merkmale:
a) die Spule (1) weist Endbereiche auf,
b) wenigstens ein Teil (6) des magnetisch leitfähigen Materials (6, 7) ist in wenigstens einem der Endbereiche der Spule (1) angeordnet.

4. Drehwinkelsensor nach wenigstens einem der vorangehenden Patentansprüche **dadurch gekennzeichnet, daß** das magnetisch leitfähige Element (3) um seine Drehachse (4) in eine beliebige Winkellage gedreht werden kann.

5. Drehwinkelsensor nach wenigstens einem der vorangehenden Patentansprüche **dadurch gekennzeichnet, daß** das magnetisch leitfähige Element (3) an einer Welle (9) befestigt ist, die um die Drehachse (4) drehbar ist.

6. Drehwinkelsensor nach wenigstens einem der vorangehenden Patentansprüche **dadurch gekennzeichnet, daß** die Spule (1) innerhalb einer weiteren Spule (10), die ebenfalls eine einzige Wicklung aufweist, angeordnet ist.

7. Drehwinkelsensor nach wenigstens einem der vorangehenden Patentansprüche **dadurch gekennzeichnet, daß** das magnetisch leitfähige Element (3) als Sektor eines rotationssymmetrischen Körpers, dessen Symmetrieachse parallel zu der Drehachse (4) angeordnet ist, ausgebildet ist.

8. Drehwinkelsensor nach Patentanspruch 7, **dadurch gekennzeichnet, daß** der rotationssymmetrische Körper ein Kreiszylinder ist.

9. Drehwinkelsensor nach Patentanspruch 7, **dadurch gekennzeichnet, daß** der rotationssymmetrische Körper ein Kegelstumpf ist.

10. Drehwinkelsensor nach wenigstens einem der vorangehenden Patentansprüche **dadurch gekennzeichnet, daß** das magnetisch leitfähige Element (3) als Halbzylinder, dessen Längsachse parallel zu der Drehachse (4) angeordnet ist, ausgebildet ist.

11. Drehwinkelsensor nach wenigstens einem der vorangehenden Patentansprüche **dadurch gekennzeichnet, daß** die Drehachse (4) außerhalb des von dem magnetisch leitfähigen Teil (11) überdeckten Bereiches angeordnet ist.

12. Drehwinkelsensor nach wenigstens einem der vorangehenden Patentansprüche **dadurch gekennzeichnet, daß** die Drehachse (4) außerhalb des von dem magnetisch leitfähigen Teil (11) und dem magnetisch leitfähigen Material (6, 7) umschlossenen Raumes angeordnet ist.

## Claims

1. Angle of rotation sensor having the following features:
a) a coil (1), which has turns (2), is provided,
b) a magnetically conductive element (3) is located inside the coil (1),
c) the magnetically conductive element (3) is so arranged that it is rotatable about an axis of rotation (4),
d) a region of the axis of rotation (4) is located inside the coil (1),
e) the magnetically conductive element (3) has a small thickness compared to its length,
f) the coil (1) has a single winding,
**characterised by** the following features:
g) the axis of rotation (4) of the magnetically conductive element (3) is arranged perpendicular to the longitudinal axis (5) of the coil (1),
h) the magnetically conductive element (3) has a rectangular or square shape,
i) the coil (1) is constructed in a box shape having a rectangular or square cross-section.

2. Angle of rotation sensor having the following features:
a) a coil (1), which has turns (2), is provided,
b) a magnetically conductive element (3) is located inside the coil (1),
c) the magnetically conductive element (3) is so arranged that it is rotatable about an axis of rotation (4),
d) a region of the axis of rotation (4) is located inside the coil (1),
e) the axis of rotation (4) of the magnetically conductive element (3) is arranged parallel to the longitudinal axis (5) of the coil (1),
f) the coil (1) has a single winding,
g) the coil (1) is at least in part surrounded by magnetically conductive material (6, 7),
h) at least a part (6) of the magnetically conductive material (6, 7) is arranged perpendicular to the longitudinal axis (5) of the coil (1),
i) at least a part (7) of the magnetically conductive material (6, 7) is arranged parallel to the longitudinal axis (5) of the coil (1),
j) a magnetically conductive part (11) is, at an end region of the magnetically conductive element (3), arranged immovably with respect to the coil (1),
**characterised by** the following features:
k) the end face (13) of the magnetically conductive part (11) facing the axis of rotation (4) has a straight contour,
l) the magnetically conductive parts (6, 7, 11) are in the form of sheet metal parts which provide half-sided surrounding of the coil (1).

3. Angle of rotation sensor according to at least one of the previous patent claims,
**characterised by** the following features:
a) the coil (1) has end regions,
b) at least one part (6) of the magnetically conductive material (6, 7) is arranged at at least one of the end regions of the coil (1).

4. Angle of rotation sensor according to at least one of the previous patent claims,
**characterised in that** the magnetically conductive element (3) can be rotated about its axis of rotation (4) into any angular position.

5. Angle of rotation sensor according to at least one of the previous patent claims,
**characterised in that** the magnetically conductive element (3) is fixed to a shaft (9), which is rotatable about the axis of rotation (4).

6. Angle of rotation sensor according to at least one of the previous patent claims,
**characterised in that** the coil (1) is arranged within a further coil (10), which likewise has a single winding.

7. Angle of rotation sensor according to at least one of the previous patent claims,
**characterised in that** the magnetically conductive element (3) is in the form of a sector of a rotationally symmetrical body, the axis of symmetry of which is arranged parallel to the axis of rotation (4).

8. Angle of rotation sensor according to patent claim 7, **characterised in that** the rotationally symmetrical body is a circular cylinder.

9. Angle of rotation sensor according to patent claim 7, **characterised in that** the rotationally symmetrical body is a truncated cone.

10. Angle of rotation sensor according to at least one of the previous patent claims,
**characterised in that** the magnetically conductive element (3) is in the form of a half-cylinder, the longitudinal axis of which is arranged parallel to the axis of rotation (4).

11. Angle of rotation sensor according to at least one of the previous patent claims,
**characterised in that** the axis of rotation (4) is arranged outside the region overlapped by the magnetically conductive part (11).

12. Angle of rotation sensor according to at least one of the previous patent claims,
**characterised in that** the axis of rotation (4) is arranged outside the space surrounded by the magnetically conductive part (11) and the magnetically conductive material (6, 7).

## Revendications

1. Détecteur d'angle de rotation présentant les caractéristiques suivantes:
a) il est prévu une bobine (1), qui comporte des spires (2),
b) un élément magnétiquement conducteur (3) est disposé à l'intérieur de la bobine (1),
c) l'élément magnétiquement conducteur (3) est disposé de telle sorte qu'il peut tourner autour d'un axe de rotation (4),
d) une partie de l'axe de rotation (4) est située à l'intérieur de la bobine (1),
e) l'élément magnétiquement conducteur (3) possède une faible épaisseur par rapport à sa longueur,
f) la bobine (1) possède un seul enroulement,
**caractérisé par** les caractéristiques suivantes:
g) l'axe de rotation (4) de l'élément magnétiquement conducteur (3) est disposé perpendiculairement à l'axe longitudinal (5) de la bobine (1),
h) l'élément magnétiquement conducteur (3) possède une forme rectangulaire ou carrée,
i) la bobine (1) est réalisée sous la forme d'une boîte ayant une section transversale rectangulaire ou carrée.

2. Détecteur d'angle de rotation présentant les caractéristiques suivantes:
a) il est prévu une bobine (1), qui comporte des spires (2),
b) un élément magnétiquement conducteur (3) est disposé à l'intérieur de la bobine (1),
c) l'élément magnétiquement conducteur (3) est disposé de telle sorte qu'il peut tourner autour d'un axe de rotation (4),
d) une partie de l'axe de rotation (4) est située à l'intérieur de la bobine (1),
e) l'axe de rotation (4) de l'élément magnétiquement conducteur (3) est disposé parallèlement à l'axe longitudinal (5) de la bobine (1),
f) la bobine (1) possède un seul enroulement,
g) la bobine (1) est entourée au moins en partie par un matériau magnétiquement conducteur (6, 7),
h) au moins une partie (6) du matériau magnétiquement conducteur (6, 7) est disposée perpendiculairement à l'axe longitudinal (5) de la bobine (1),
i) au moins une partie (7) du matériau magnétiquement conducteur (6, 7) est disposée parallèlement à l'axe longitudinal (5) de la bobine (1),
j) une partie magnétiquement conductrice (11) est disposée dans une partie d'extrémité de l'élément magnétiquement conducteur (3), en étant immobile par rapport à la bobine (1),
**caractérisé par** les caractéristiques suivantes:
k) la face frontale (13), tournée vers l'axe de rotation (4), de la partie magnétiquement conductrice (11) possède un contour rectiligne,
l) les parties magnétiquement conductrices (6, 7, 11) sont agencées sous la forme de pièces en tôle, qui entourent sur un demi-côté la bobine (1).

3. Détecteur d'angle de rotation selon au moins l'une des revendications précédentes, **caractérisé par** les caractéristiques suivantes:
a) la bobine (1) comporte des parties d'extrémité,
b) au moins une partie (6) du matériau magnétiquement conducteur (6, 7) est disposée dans au moins l'une des parties d'extrémité de la bobine (1).

4. Détecteur d'angle de rotation selon au moins l'une des revendications précédentes, **caractérisé en ce qu'**on peut faire tourner l'élément magnétiquement conducteur (3) autour de son axe de rotation (4) pour l'amener dans une position angulaire quelconque.

5. Détecteur d'angle de rotation selon au moins l'une des revendications précédentes, **caractérisé en ce que** l'élément magnétiquement conducteur (3) est fixé sur un arbre (9) qui peut tourner autour de l'axe de rotation (4).

6. Détecteur d'angle de rotation selon au moins l'une des revendications précédentes, **caractérisé en ce que** la bobine (1) est disposée à l'intérieur d'une autre bobine (10), qui possède également un seul enroulement.

7. Détecteur d'angle de rotation selon au moins l'une des revendications précédentes, **caractérisé en ce que** l'élément magnétiquement conducteur (3) est agencé sous la forme d'un secteur d'un corps à symétrie de révolution, dont l'axe de symétrie est parallèle à l'axe de rotation (4) .

8. Détecteur d'angle de rotation selon la revendication 7, **caractérisé en ce que** le corps à symétrie de révolution est un cylindre circulaire.

9. Détecteur d'angle de rotation selon la revendication 7, **caractérisé en ce que** le corps à symétrie de révolution est un tronc de cône.

10. Détecteur d'angle de rotation selon au moins l'une des revendications précédentes, **caractérisé en ce que** l'élément magnétiquement conducteur (3) est agencé sous la forme d'un demi-cylindre, dont l'axe longitudinal est parallèle à l'axe de rotation (4).

11. Détecteur d'angle de rotation selon au moins l'une des revendications précédentes, **caractérisé en ce que** l'axe de rotation (4) est disposé à l'extérieur de la partie recouverte par la partie magnétiquement conductrice (11) .

12. Détecteur d'angle de rotation selon au moins l'une des revendications précédentes, **caractérisé en ce que** l'axe de rotation (4) est disposé à l'extérieur de l'espace entouré par la partie magnétiquement conductrice (11) et le matériau magnétiquement conducteur (6, 7).
